# EUROPEAN PATENT APPLICATION

(11) **EP 4 844 521 A1**
(43) Date of publication of application: **25.11.2026**
(21) Application number: 26159656.3
(22) Date of filing: 19.02.2026
(51) Int. Cl.: G05D 21/02

(54) **GAS CONCENTRATION CONTROL SYSTEM AND GAS CONCENTRATION CONTROL METHOD**

(30) Priority: 23.05.2025 JP 2025086263
(71) Applicant: Hitachi, Ltd., Tokyo 100-8280 (JP)
(72) Inventor: TOKUDA, Yuya, Tokyo, 100-8280 (JP); YASHIKI, Tatsurou, Tokyo, 100-8280 (JP); INAGAKI, Ryohei, Tokyo, 100-8280 (JP); ISHIDA, Naoyuki, Tokyo, 100-8280 (JP); WATANABE, Ayumi, Tokyo, 100-8280 (JP); IIZUKA, Hidehiro, Tokyo, 100-8280 (JP)
(74) Representative: Mewburn Ellis LLP

(57) **Abstract**

A gas concentration control system includes a gas separator that separates supply gas, which is mixed gas, into permeate gas with a high concentration of an arbitrary component and non-permeate gas with a low concentration, a regulating valve that adjusts a ratio of permeate gas and non-permeate gas in product gas obtained by remixing the separated permeate gas and non-permeate gas, a vent valve that adjusts a gas flow rate for returning part of the permeate gas or the non-permeate gas to a supply source of the mixed gas, a gas concentration meter that measures a gas concentration of the supply gas and a gas concentration of the remixed gas, and a concentration and/or pressure control unit that controls a concentration and/or pressure of the product gas by switching a combination of the regulating valve.

## Description

### BACKGROUND

### Technical Field

The present invention relates to a gas concentration control system and a gas concentration control method.

### Related Art

In recent years, various countries have begun implementing plans to transport hydrogen by injecting it into existing gas lines, thereby decarbonizing gas usage at gas consumers. Gas consumers can use one or both of existing gas, such as natural gas, and hydrogen gas. In gas concentration control devices used for such grids, equipment that adjusts the concentration of utilized gas, such as hydrogen concentration, and the pressure according to demand of gas consumers is essential.

Patent Literature 1 discloses a technique, as a gas supply system, for allocating valves responsible for concentration and pressure control among a plurality of valves, according to the concentration of supply gas flowing into devices from grids, as well as according to demand of gas consumers.

### Citation List

### Patent Literature

Patent Literature 1: JP 2024-170996 A

### SUMMARY

The gas supply system disclosed in Patent Literature 1 is effective when valves responsible for concentration control and pressure control are allocated among a plurality of valves according to the concentration of supply gas.

However, since errors occur in measurement values of sensors due to a factor, such as an external factor or a change in the equipment state, the measurement values may be different between sensors even when the same gas is targeted.

For example, when the measurement accuracy of the hydrogen concentration does not match between product gas to be provided to gas consumers and supply gas, the valves responsible for concentration control and pressure control cannot be switched at an appropriate timing in some cases. When such a malfunction occurs, there is a concern that the hydrogen concentration and the pressure cannot be controlled to meet the demand of gas consumers. Note that, in Patent Literature 1, control means for cases where the sensor measurement accuracy does not match between the product gas and the supply gas are not explicitly stated.

From these situations, a system suitable for controlling a supply amount of mixed gas and the concentration of a gas component in the mixed gas, even when the measurement accuracy of the state quantity does not match between product gas and supply gas due to some factors, has been required.

An object of the present invention is to provide a gas concentration control system and a gas concentration control method suitable for controlling a supply amount of mixed gas and a concentration of a gas component in the mixed gas.

In order to solve the above problem, a configuration described in the claims is adopted, for example.

The present application includes a plurality of means for solving the above problem, and an example thereof is a gas concentration control device configured to adjust a concentration of product gas according to demand, the gas concentration control device includes a gas separator that separates supply gas, the supply gas being mixed gas, into permeate gas with a high concentration of an arbitrary component and non-permeate gas with a low concentration, a regulating valve that adjusts a ratio of permeate gas and non-permeate gas in product gas obtained by remixing the permeate gas and the non-permeate gas separated by the gas separator, a vent valve that adjusts a gas flow rate for returning part of the permeate gas or the non-permeate gas to a supply source of the mixed gas, a gas concentration meter that measures a gas concentration of the supply gas and a gas concentration of the remixed gas, and a concentration and/or pressure control unit that controls a concentration and/or pressure of the product gas by switching a combination of the regulating valve and the vent valve based on two or more conditions of gas concentrations and gas pressures of the supply gas and the product gas.

According to the present invention, it is possible to appropriately control the concentration of a gas component in mixed gas even when the measurement accuracy of the state quantity does not match between product gas and supply gas due to some external factors or changes in the equipment state. As a result, it is possible to minimize the influence on gas consumers due to an abnormality, in which the accuracy of sensors that measure the gas concentration decreases, for example, due to external factors or changes in the equipment state.

Problems, configurations, and effects other than those described above will be clarified by the following description of an embodiment.

### BRIEF DESCRIPTION OF DRAWINGS

FIG. 1 is a configuration diagram illustrating an example of a gas concentration control system according to an embodiment of the present invention;
FIG. 2 is a block diagram illustrating a hardware configuration example of a computer of a gas concentration control system according to an embodiment of the present invention;
FIG. 3 is a diagram illustrating an example of changes in gas concentrations and valve openings in a gas concentration control system according to an embodiment of the present invention (concentration control for mixed gas when no error occurs in sensor measurement values);
FIG. 4 is a diagram illustrating an example of conventional changes in gas concentrations and valve openings;
FIG. 5 is a diagram illustrating an example of changes in gas concentrations and valve openings in a gas concentration control system according to an embodiment of the present invention (concentration control for mixed gas when an error occurs in sensor measurement values);
FIG. 6 is a flowchart illustrating a procedure of processing of a gas concentration control system according to an embodiment of the present invention; and
FIG. 7 is a diagram illustrating an example of a display screen of a gas concentration control system according to an embodiment of the present invention.

### DETAILED DESCRIPTION

Hereinafter, a gas concentration control system and a gas concentration control method according to an embodiment (hereinafter, referred to as "present embodiment") of the present invention will be described with reference to the accompanying drawings. In this specification and the accompanying drawings, the same reference signs are assigned to common constituent elements or similar constituent elements, and redundant descriptions are omitted.

### [Configuration of gas concentration control system]

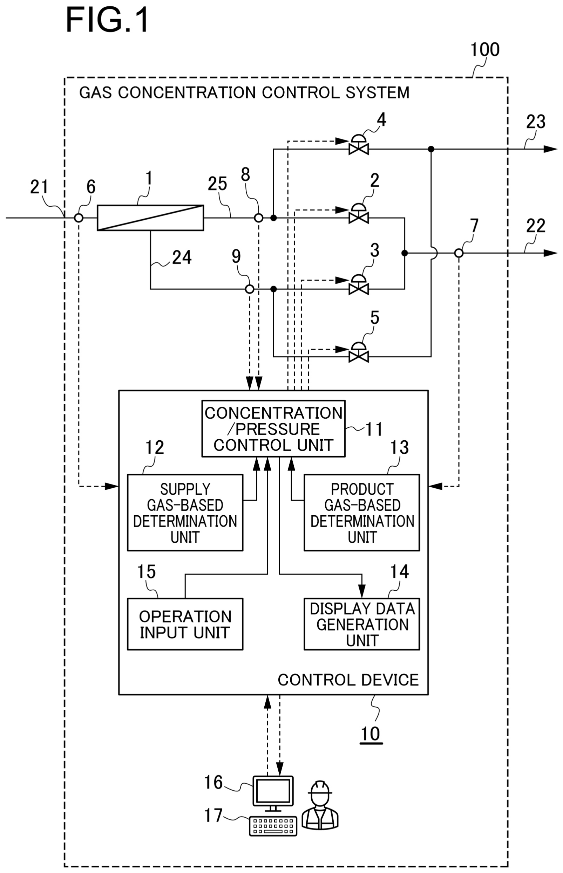

FIG. 1 illustrates a configuration example of a gas concentration control system 100 according to the present embodiment.

The gas concentration control system 100 is used, for example, when hydrogen produced by electrolysis of water using renewable energy or the like, reforming of natural gas, or the like is mixed with existing gas (natural gas or the like) and supplied to hydrogen users using pipelines. The gas concentration control system 100 according to the present embodiment manages and controls the supply status of existing gas and hydrogen.

FIG. 1 is a diagram illustrating an example of a configuration of the gas concentration control system 100. The gas concentration control system 100 illustrated in FIG. 1 includes a gas separator 1, regulating valves 2 to 5, sensors 6 to 9, a control device 10, a display device 16, and an input device 17 as main elements.

The control device 10 includes a concentration/pressure control unit 11, a supply gas-based determination unit 12, a product gas-based determination unit 13, an operation input unit 15, and a display data generation unit 14.

The gas concentration control system 100 extracts an arbitrary gas component from supply gas 21, adjusts the concentration of the gas component to a target value, provides the gas obtained by the adjustment to a gas consumer as product gas 22, and outputs surplus gas as vent gas 23. The vent gas 23 is subjected to, for example, processing of being returned to a grid (pipeline), which is a supply source of the supply gas 21, after being pressurized.

When the gas separator 1 is operating normally, the concentration of the gas component in the product gas 22 output from the gas concentration control system 100 (for example, hydrogen concentration) falls within a certain range where errors are allowed. Note that the configuration of the gas concentration control system 100 is an example, and the numbers of the gas separators 1, the regulating valves 2 to 5, and the sensors 6 to 9 may be changed, or some of them may be installed outside the gas concentration control system 100.

The gas separator 1 is a device that performs gas separation processing of extracting a gas component from the supply gas 21 containing a plurality of different gas components (an example of mixed gas). The gas separator 1 outputs permeate gas 24 with a high gas concentration of the extraction target and non-permeate gas 25 with a low gas concentration of the extraction target.

For example, when mixed gas of natural gas and hydrogen gas is supplied to the gas separator 1 that extracts hydrogen gas, gas with a high hydrogen gas concentration is output as the permeate gas 24, and gas with a high natural gas concentration is output as the non-permeate gas 25. Note that there are various methods for configuring the gas separator 1 to perform gas separation, such as a membrane separation method and a pressure fluctuation separation method, but any method may be applied as the configuration to perform gas separation.

The regulating valves 2 to 5 installed on the downstream side of the gas separator 1 are used to control the concentration of the product gas 22. The valve openings of the regulating valves 2 to 5 are controlled by the concentration/pressure control unit 11 of the control device 10, and adjustment processing for the concentration or pressure is performed by adjusting the valve openings. Note that the regulating valve 2 is a valve that controls the flow rate of the non-permeate gas 25 to be added to the product gas 22. The regulating valve 3 is a valve that controls the flow rate of the permeate gas 24 to be added to the product gas 22. The regulating valve 4 is a valve that controls the flow rate of the non-permeate gas 25 to be output to the vent gas 23. The regulating valve 5 is a valve that controls the flow rate of the permeate gas 24 to be output to the vent gas 23. The regulating valve 4 and the regulating valve 5 can be regarded as vent valves. The valve openings of the regulating valve 4 and the regulating valve 5 as the vent valves are controlled by the concentration/pressure control unit 11 of the control device 10, thereby performing vent processing of adjusting the gas flow rate for returning part of the permeate gas or the non-permeate gas to a supply source of the mixed gas.

The valve openings of the regulating valves 2 to 5 are determined by, for example, a gas demand amount of the gas consumer, a balance of a total flow rate of the gas 21 to 25, the pressures of the permeate gas 24 and the non-permeate gas 25, and the like. In addition, the valve openings of the regulating valves 2 to 5 may be manually operated by an administrator or the like, or may be remotely controlled by a monitoring center or the like of a gas supply company.

The sensors 6 to 9 are devices that each measure any one or more of the concentration, flow rate, pressure, and temperature of each gas component, and function as gas concentration meters, gas flow meters, gas pressure meters, and gas thermometers. For example, in a case where the sensors 6 to 9 are concentration sensors, the sensors 6 to 9 as gas concentration meters perform gas concentration measurement processing. The measurement values of the sensors 6 to 9 are transmitted to the control device 10.

Note that, since errors occur in the measurement values of the sensors 6 to 9 due to a factor, such as an external factor or a change in the equipment state, the measurement values may be different between the sensors even when the same gas is targeted.

The control device 10 is a device that controls and monitors operation quantities of the equipment (the gas separator 1, the regulating valves 2 to 5, and other devices) of the gas concentration control system 100, including the valve openings of the regulating valves 2 to 5. For example, the control device 10 controls the flow rate of the product gas 22 output from the gas concentration control system 100 and the concentration of the gas component in the product gas, according to the demand of the gas consumer.

For this purpose, the supply gas-based determination unit 12 of the control device 10 determines the concentration and the pressure of the supply gas 21 from the measurement values of the sensors 6, 8, and 9. In addition, the product gas-based determination unit 13 of the control device 10 determines the concentration and the pressure of the product gas 22 from the measurement values of the sensors 7, 8, and 9.

Then, the concentration/pressure control unit 11 acquires a determination result of the supply gas-based determination unit 12 and a determination result of the product gas-based determination unit 13, and calculates the openings of the regulating valves 2 to 5 and the operation quantities of other devices. Note that the concentration/pressure control unit 11 can control only the concentration of the product gas 22, only the pressure of the product gas 22, and both the concentration and the pressure of the product gas 22. Therefore, from the perspective of control functions, the concentration/pressure control unit 11 can be regarded as a concentration and/or pressure control unit.

Note that measurement values other than those from the sensors 6 to 9 may be used to calculate the openings of the valves and the operation quantities of the devices.

As a calculation method for the openings of the valves and the operation quantities of the devices in the control device 10, a calculation method using PID control, model predictive control, or artificial intelligence (AI) control can be applied, for example. The PID control is a feedback control that combines three control operations of proportional, integral, and derivative. However, the calculation method using the PID control, model predictive control, or AI control is an example, and other calculation methods may be applied to the control for the openings of the valves and the operation quantities of the devices.

The display device 16 is a device that is used to present information to an administrator of the gas concentration control system 100. The display device 16 acquires and displays display data generated by the display data generation unit 14 of the control device 10 and indicating a control state in the concentration/pressure control unit 11.

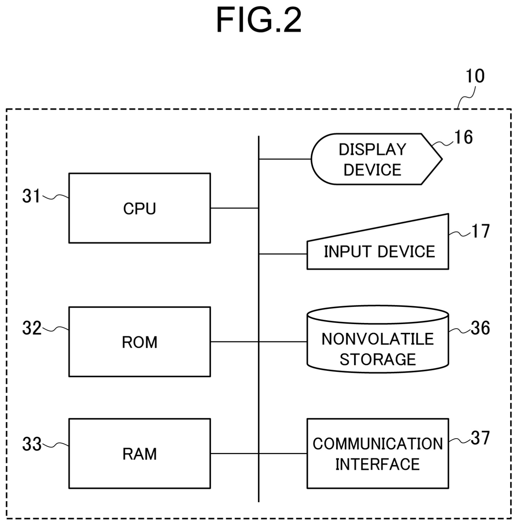

The display device 16 also displays a graphical user interface (GUI) screen, a result of arithmetic processing of a CPU 31 in FIG. 2, which will be described later, and the like. Note that, as the display device 16, a liquid crystal display as a monitor for a computer or a display unit for a terminal, such as a smartphone or a tablet, is used, for example.

The input device 17 is a device that is used for the administrator of the gas concentration control system 100 to input management information and a command to the gas concentration control system 100. The input device 17 generates an input signal corresponding to the operation of the administrator and outputs the input signal to the operation input unit 15 of the control device 10. The input device 17 is, for example, a keyboard, a mouse, a joystick, a touch panel, or the like.

### [Hardware configuration of control device]

FIG. 2 is a diagram illustrating a hardware configuration example of the computer constituting the control device 10.

The control device 10 illustrated in FIG. 2 is an example of hardware used as a computer. In the control device 10, the computer executes a program to configure processing functional units, such as the concentration/pressure control unit 11, the supply gas-based determination unit 12, and the product gas-based determination unit 13, and performs gas concentration control.

The control device 10 includes a central processing unit (CPU) 31, a read only memory (ROM) 32, a random access memory (RAM) 33, a nonvolatile storage 36, and a communication interface 37, which are connected to a system bus. The display device 16 and the input device 17 are connected to the control device 10.

The CPU 31 reads a program code of software for implementing each function of the control device 10 from the ROM 32, loads the program code into the RAM 33, and executes the program code. The RAM 33 temporarily stores variables, parameters, and the like generated during arithmetic processing of the CPU 31, and these variables, parameters, and the like are appropriately read by the CPU 31. The CPU 31 executes program codes read from the ROM 32, thereby implementing the functions of the gas concentration control system 100 (control device 10). However, another processor, such as a micro processing unit (MPU), may be used instead of the CPU 31.

The nonvolatile storage 36 is an example of a recording medium, and can store data to be used by a program, data obtained by executing a program, and the like. In addition, the nonvolatile storage 36 may record an operating system (OS) or a program to be executed by the CPU 31. As the nonvolatile storage 36, a hard disk drive (HDD), a solid state drive (SSD), an optical disk utilizing light (and magnetism), a semiconductor memory card, or the like is used.

As the communication interface 37, a communication device, such as a network interface card (NIC), is used, for example. The communication interface 37 can transmit and receive various types of data to and from an external device via a communication network, such as a LAN, a dedicated line, or the like. Communication between the control device 10 and the equipment in the gas concentration control system 100 may be performed by using the communication interface 37.

Note that the equipment of the gas consumer can also adopt a hardware configuration of a computer similar to that of the control device 10 illustrated in FIG. 2. In addition, a terminal used by the administrator of the gas concentration control system 100, an administrator of equipment 200 of the gas consumer, or the like can also adopt a hardware configuration similar to that of the computer as the control device 10 illustrated in FIG. 2.

### [Example of gas concentration control]

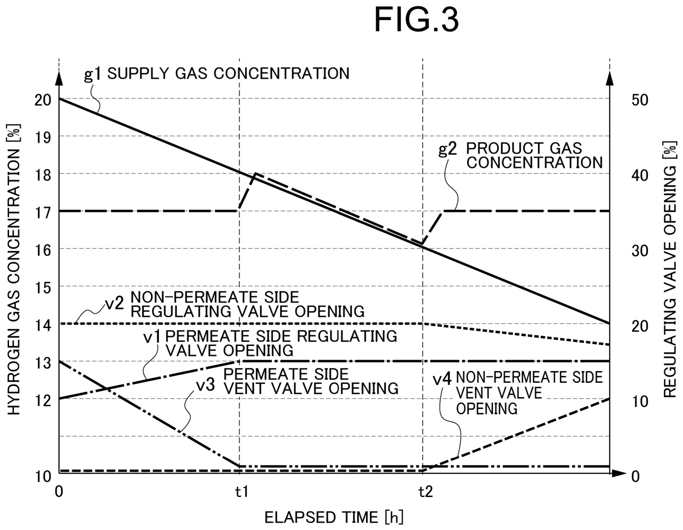

Next, an example of a control method when an error occurs in measurement values of the sensors 6 to 9 due to some external factors or changes in the equipment state in the gas concentration control system 100 will be described with reference to FIGS. 3 to 5.

In the present embodiment, it is assumed that the supply gas 21 is mixed gas of hydrogen and natural gas, and the equipment of the gas consumer requires a supply of the mixed gas with a hydrogen concentration of 17±1% at a constant pressure of 1 MPa.

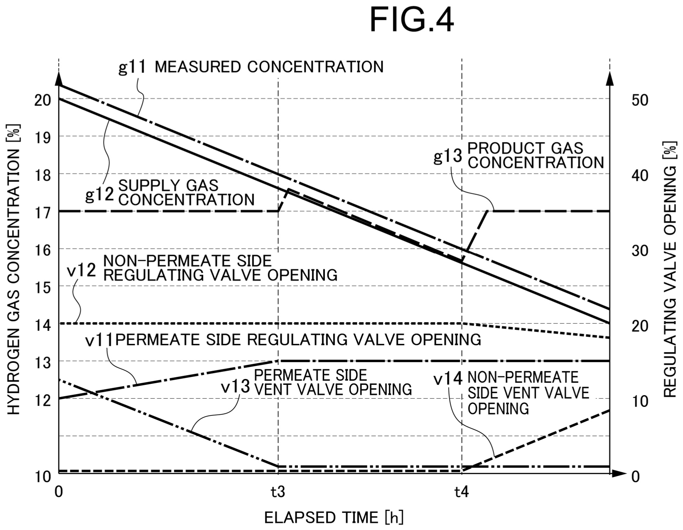

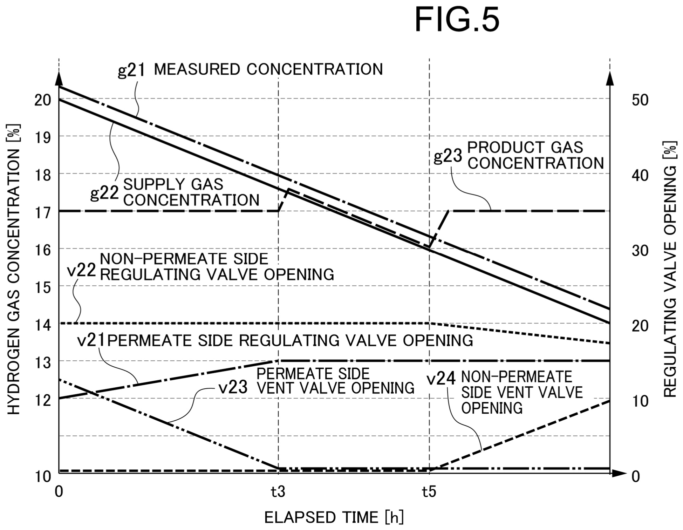

FIG. 3 is a diagram for explaining concentration control for mixed gas when no error occurs in measurement values of the sensors 6 to 9. FIG. 4 is a diagram for explaining conventional hydrogen concentration control when an error of +0.5 occurs in the measurement value of the sensor 6, and FIG. 5 is a diagram for explaining hydrogen concentration control according to the present embodiment when an error of +0.5 occurs in the measurement value of the sensor 6.

In the present embodiment, the concentration of hydrogen gas is adjusted, but the concentration of natural gas may be adjusted.

### (Control when no error occurs in measurement values)

FIG. 3 is a diagram illustrating an example of the concentration control for mixed gas when no error occurs in measurement values of the sensors 6 to 9 in the gas concentration control system 100. In FIG. 3, the vertical axis represents the hydrogen gas concentration (%), and the horizontal axis represents the elapsed time (h). Also, in FIGS. 4 and 5 described later, the vertical axis represents the hydrogen gas concentration (%), and the horizontal axis represents the elapsed time (h).

In the example of FIG. 3, a supply gas concentration g1 is the hydrogen concentration of the supply gas 21 flowing into the gas concentration control system 100, and a product gas concentration g2 is the hydrogen concentration of the product gas 22 output from the gas concentration control system 100 to the gas consumer.

A non-permeate side regulating valve opening v2 is the valve opening of the regulating valve 2 that controls the flow rate of the non-permeate gas 25 to be added to the product gas 22, and a permeate side regulating valve opening v1 is the valve opening of the regulating valve 3 that controls the flow rate of the permeate gas 24 to be added to the product gas 22.

A non-permeate side vent valve opening v4 is the valve opening of the regulating valve 4 that controls the flow rate of the non-permeate gas 25 to be output to the vent gas 23, and a permeate side regulating valve opening v3 is the valve opening of the regulating valve 5 that controls the flow rate of the permeate gas 24 to be output to the vent gas 23.

In this example, the supply gas concentration g1 decreases from 20% at time 0 to 14% over time. In contrast, the product gas concentration g2 has been adjusted so that the mixed gas with a hydrogen concentration of 17±1% satisfies 1 MPa. This adjustment is performed by the concentration/pressure control unit 11 of the control device 10 calculating the valve openings of the regulating valves 2 to 5.

The supply gas concentration g1 at time 0 is a hydrogen concentration higher than the hydrogen concentration of 17±1%, which is the demand of the gas consumer. Therefore, by setting the regulating valve 3 to a low opening, the flow rate of the permeate gas 24 to be added to the product gas 22 is throttled. At this time, while excessive hydrogen is output to the vent gas 23 by opening the regulating valve 5, the pressure is kept constant by adjusting the openings of the regulating valve 2 and the regulating valve 5.

Thereafter, the supply gas concentration g1 decreases over time, and reaches 18% at time t1, which falls within the range required by the gas consumer. At this time, the openings of the regulating valves 4 and 5 are set to 0, and all the supply gas 21 is provided to the equipment of the gas consumer as the product gas 22. Note that the pressure of the product gas 22 is kept constant by adjusting the openings of the regulating valves 2 and 3.

Furthermore, the supply gas concentration g1 decreases over time, and reaches a hydrogen concentration lower than the demand of the gas consumer (less than 16%) at time t2. Therefore, by setting the regulating valve 2 to a low opening, the flow rate of the non-permeate gas 25 to be added to the product gas 22 is throttled. At this time, while the excessive non-permeate gas 25 with a low hydrogen concentration is output to the vent gas 23 by opening the regulating valve 4, the pressure of the product gas 22 is kept constant by adjusting the openings of the regulating valves 3 and 4.

### (Conventional control when error occurs in measured values)

FIG. 4 is a diagram illustrating an example of conventional mixed gas concentration control when a measurement error occurs in the sensor 7.

In the example of FIG. 4, a measured concentration g11 is the sensor value when the hydrogen concentration of the supply gas 21 is measured by the sensor 7. In addition, a supply gas concentration g12, a product gas concentration g13, a non-permeate side regulating valve opening v12, a permeate side regulating valve opening v11, a non-permeate side vent valve opening v14, and a permeate side vent valve opening v13 are similar to the supply gas concentration g1, the product gas concentration g2, and the valve openings v2, v1, v4, and v3 illustrated in FIG. 3.

In the example of FIG. 4, the measured concentration g11 is +0.5% higher than the supply gas concentration. Therefore, in the example of FIG. 3, the openings of the regulating valves 4 and 5 are set to 0 at the time when the supply gas concentration g1 is 18% (at time t1), whereas in the example of FIG. 4, the openings of the regulating valves 4 and 5 are set to 0 at the time when the measured concentration g11 is 18% (at time t3, the supply gas concentration g12 is 17.5%). Thus, the switching time is delayed.

In addition, in the example of FIG. 3, the regulating valve 2 is adjusted from the time when the supply gas concentration g1 is 16% (time t2) to throttle the flow rate of the non-permeate gas 25 to be added to the product gas 22, whereas, in the example of FIG. 4, the adjustment of the regulating valve 2 is started after the measured concentration g11 reaches 16% (at time t4, the supply gas concentration g12 is 15.5%).

Due to the measurement error, the timing of adjusting the regulating valve 2 is delayed, and the product gas concentration g13 reaches 15.5%, which deviates from the range required by the gas consumer (hydrogen concentration 17±1%). Here, since the condition for closing the regulating valve 4 and the regulating valve 5 is set to "the hydrogen concentration of the supply gas 21 is 16 to 18%", setting the range of this condition to a narrower range makes it possible to avoid the product gas concentration g13 from deviating from the range required by the gas consumer due to the measurement error.

However, for example, in order to avoid the product gas concentration g13 from deviating from the range required by the gas consumer, it is necessary to set the condition for closing the regulating valves 4 and 5 to the range of "the hydrogen concentration of the supply gas 21 is 17±0%". Therefore, the period in which both the regulating valve 4 and the regulating valve 5 are closed is limited to a very short period.

During the period in which both the regulating valve 4 and the regulating valve 5 are closed, the vent gas 23 is zero, and the recovery rate of the supply gas 21 is 100% (flow rate of the product gas 22/flow rate of the supply gas 21). Thus, the cost benefit as the gas consumer is high. Therefore, a wider range of conditions for closing both regulating valves 4 and 5 is preferable.

### (Control in the present embodiment when an error occurs in measurement value)

FIG. 5 is a graph illustrating an example of mixed gas concentration control when a measurement error occurs in the sensor 7 in the gas concentration control system 100. In FIG. 5, a measured concentration g21, a supply gas concentration g22, a product gas concentration g23, a non-permeate side regulating valve opening v22, a permeate side regulating valve opening v21, a non-permeate side vent valve opening v24, and a permeate side vent valve opening v23 are similar to the concentrations g11 and g12 and the valve openings v12, v11, v14, and v13 illustrated in FIG. 4.

Also, in the example of FIG. 5 in which the control according to the present embodiment is performed, the measured concentration g21 is +0.5% higher than the supply gas concentration g22 as in the example of FIG. 4. Therefore, similarly to the example of FIG. 4, the openings of the regulating valve 4 and the regulating valve 5 are set to zero when the measured concentration g21 is 18% (at time t3, the supply gas concentration g22 is 17.5%) in the present embodiment.

Then, the control device 10 compares the conditions for starting adjustment of the regulating valve 2. In the example of FIG. 4, the adjustment of the regulating valve 2 is started after the measured concentration g11 reaches 16% (at time t4, the supply gas concentration g12 is 15.5%), as described above.

In contrast, the control device 10 according to this embodiment calculates the state of the control valve by referring to the concentration g23 of the produced gas in addition to the concentration g22 of the supply gas 21. Therefore, in the present embodiment, by referring to the product gas concentration g23, the adjustment of the regulating valve 2 is started when the product gas concentration g23 is 16% (at time t5, the measured concentration g21 is 16.5%). As a result, unlike the conventional example illustrated in FIG. 4, the product gas concentration g23 does not deviate from the range required by the gas consumer.

In addition, as compared with the example described in the example of FIG. 4 in which the condition for closing the regulating valve 4 and the regulating valve 5 is narrowed, the period in which the regulating valve 4 and the regulating valve 5 are closed is longer in the period from the time t3 to the time t5 in the example of FIG. 5.

### [Processing performed by gas concentration control system]

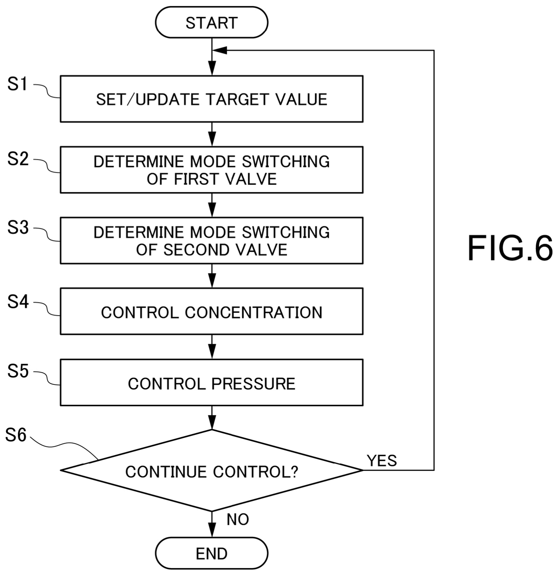

Next, processing performed by the control device 10 of the gas concentration control system 100 according to the present embodiment will be described with reference to FIG. 6.

FIG. 6 is a flowchart illustrating a procedure of processing performed by the control device 10 of the gas concentration control system 100. Here, the processing illustrated in FIG. 6 will be described in association with the example of FIG. 5.

First, the concentration/pressure control unit 11 of the control device 10 sets control target values of the gas concentration control system 100 including the regulating valves 2 to 5 (step S1).

For example, in the example of FIG. 5, the hydrogen concentration of the product gas 22 (product gas concentration g23) required by the gas consumer is set to 17±1%, and the pressure of the product gas is set to 1 MPa. In addition, when a target value, such as the hydrogen concentration of the product gas 22 required by the gas consumer, is updated, the concentration/pressure control unit 11 of the control device 10 may receive an updated value of the target value from the equipment of the gas consumer as step S1.

Next, the concentration/pressure control unit 11 of the control device 10 sets and updates the control mode of the regulating valves 2 to 5 based on the hydrogen concentration of the supply gas 21 (the supply gas concentration g22) (step S2: determine mode switching of first valve). For example, in the example of FIG. 5, at time t5, the measured concentration g21 is 16.5%, which satisfies the condition of the hydrogen concentration g23 (17±1%) of the product gas 22 required by the gas consumer. Therefore, the concentration/pressure control unit 11 closes the regulating valve 4 and the regulating valve 5, and sets the control mode of the regulating valve 2 and the regulating valve 3 to pressure control. Note that the order of performing the processing in step S1 and step S2 illustrated in FIG. 6 is an example, and the order of performing the processing may be changed as necessary.

Next, the concentration/pressure control unit 11 of the control device 10 sets the control mode of the regulating valves 2 to 5 based on the hydrogen concentration of the product gas 22 (step S3: determine mode switching of second valve). For example, in the example of FIG. 5, at time t5, the product gas concentration g23 is 16%, which is the value immediately before exceeding the range of the condition of the hydrogen concentration (17±1%) of the product gas 22 required by the gas consumer. Therefore, the concentration/pressure control unit 11 sets the control mode of the regulating valve 2 and the regulating valve 5 to the pressure control, sets the control mode of the regulating valve 3 to concentration control, and sets the regulating valve 4 to be closed.

In step S3, when the determination result is different from the determination result in step S2, the determination that the concentration has exceeded the range of the product gas concentration required by the gas consumer is prioritized. That is, when the determination results of the supply gas-based determination unit 12 and the product gas-based determination unit 13 are different from each other, the concentration/pressure control unit 11 performs the following control processing. Specifically, when the supply gas-based determination unit 12 determines that the entire flow rate of the supply gas is allowed to flow into the product gas and the product gas-based determination unit 13 determines that the entire flow rate of the supply gas is not allowed to flow into the product gas, the concentration/pressure control unit 11 prioritizes the result of the product gas-based determination unit 13 and controls the concentration and/or pressure of the product gas. This has an effect of appropriately controlling the concentration of the gas component in the mixed gas even when the measurement accuracy of the state quantity does not match between the product gas and the supply gas.

However, prioritizing the determination that the concentration has exceeded the range of the product gas concentration required by the gas consumer when the determination results of the supply gas-based determination unit 12 and the product gas-based determination unit 13 are different from each other is an example, and either determination may be prioritized.

In addition, here, when the determination results of the supply gas-based determination unit 12 and the product gas-based determination unit 13 are different from each other, one of the two determinations is prioritized. However, prioritizing any one of the determination results of the supply gas-based determination unit 12 and the product gas-based determination unit 13 is also an example. For example, the concentration/pressure control unit 11 may switch a combination of the regulating valves 2 and 3 and the vent valves 4 and 5 based on two or more conditions of the gas concentrations or gas pressures of the supply gas and the product gas to control the concentration and/or pressure of the product gas.

Next, the concentration/pressure control unit 11 of the control device 10 calculates operation quantities of the regulating valves, the devices, and the like based on the control target value of the mixed gas concentration of the gas concentration control system 100, and performs the concentration control to set the mixed gas concentration to the calculated concentration (step S4). As the control target value of the gas flow rate, the value determined in step S1 is used. For example, in the example of FIG. 5, the valve opening of the regulating valve 3 whose control mode is set to the concentration control is calculated.

Next, the concentration/pressure control unit 11 of the control device 10 calculates operation quantities of the regulating valves, the devices, and the like based on the control target value of the mixed gas pressure of the gas concentration control system 100, and performs the pressure control to set the mixed gas pressure to the calculated pressure (step S5). As the control target value of the gas flow rate, the value determined in step S1 is used. For example, in the example of FIG. 5, the valve openings of the regulating valve 2 and the regulating valve 5, whose control mode is set to the pressure control, are calculated. Note that the order of performing the processing in step S3 and step S4 illustrated in FIG. 6 is an example, and the order of performing the processing may be changed as necessary.

Next, the concentration/pressure control unit 11 of the control device 10 determines whether to continue the control of the gas concentration control system 100 (step S5). For example, in step S5, when the control of the gas concentration control system 100 is no longer necessary, such as when the gas concentration control system 100 is stopped as the equipment of the gas consumer stops operating, the concentration/pressure control unit 11 determines to stop the control (NO in step S5), and ends the processing illustrated in FIG. 6. When the control is continued in step S5 (YES in step S5), the concentration/pressure control unit 11 proceeds to the processing in step S1 and performs steps S1 to S6 again.

### [Example of display screen]

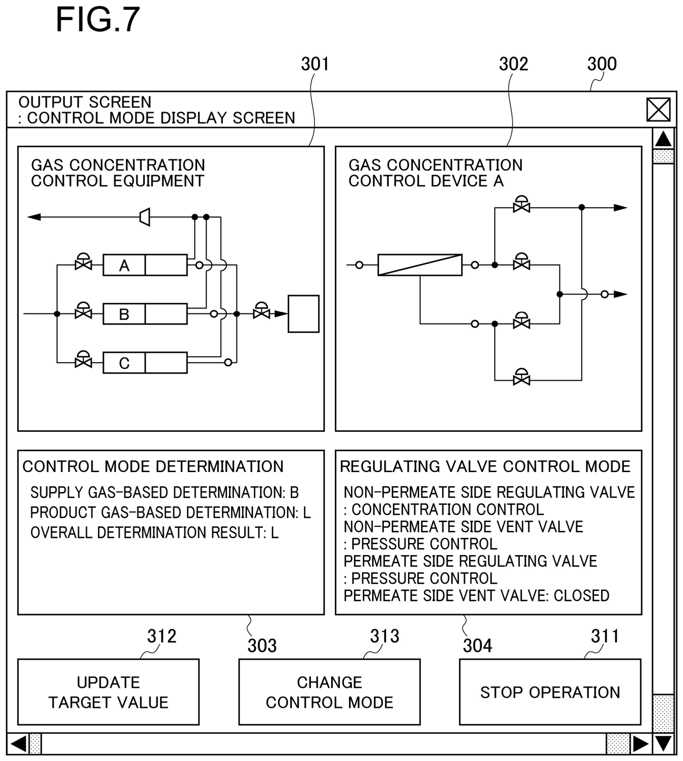

FIG. 7 is a diagram illustrating an example of a display screen 300 of the display device 16 of the gas concentration control system 100.

Here, the diagram is used as the display screen of the display device 16 of the gas concentration control system 100 illustrated in FIG. 1, but a similar display may be performed on a display device (not illustrated) of the equipment of the gas consumer.

The control mode display screen 300 illustrated in FIG. 7 performs an entire equipment display 301 that graphically illustrates the entire gas concentration control equipment including the gas concentration control system 100, and a system state display 302 that graphically illustrates the state of the gas concentration control system 100 (gas concentration control device A). In addition, the control mode display screen 300 performs a determination display 303 in step S2 and a determination display 304 in step S3.

That is, the control device 10 generates display data about information including one or both of the determination result of the supply gas-based determination unit 12 and the determination result of the product gas-based determination unit 13. Then, these determination results are displayed on the display screen 300 of the display device 16. As a specific display, for example, each of the regulating valves 2 to 5 is displayed to indicate one of the following states: concentration control is being performed, pressure control is being performed, and the valve is closed.

By performing such a display, details of the control state of each of the regulating valves (or vent valves) 2 to 5 can be known, and management by the administrator can be accurately performed. In addition, by displaying the determination result of the supply gas-based determination unit 12 and the determination result of the product gas-based determination unit 13, details, such as the concentration of the supply gas and the concentration of the product gas, can be known.

In addition, the control mode display screen 300 also includes a target value update button 312 for adjusting a target value required for the current product gas 22. When the administrator of the gas concentration control system 100 uses the input device 17 to select the display location of the target value update button 312, the control device 10 adjusts the target value required for the product gas 22. This adjustment of the target value is performed, for example, by the administrator confirming the usage status of the product gas 22 at the equipment of the gas consumer.

When the target value is adjusted, the display of the concentration of the gas component (for example, hydrogen concentration) and the gas pressure of the product gas 22 at the target value on the control mode display screen 300 is updated.

In addition, the control mode display screen 300 includes a control mode change button 313 for adjusting the current control mode of the regulating valves 2 to 5. When the administrator of the gas concentration control system 100 uses the input device 17 to select the display location of the control mode change button 313, the control device 10 changes the control mode of one or more of the regulating valves 2 to 5. This change of control mode is also performed, for example, by the administrator confirming the usage status of the product gas 22 at the equipment of the gas consumer. According to this change of control mode, the display of the control mode of the regulating valves 2 to 5 on the control mode display screen 300 is changed.

In addition, the control mode display screen 300 includes an operation stop button 311. When the administrator of the gas concentration control system 100 uses the input device 17 to select the display location of the operation stop button 311, the control device 10 stops the operation of the gas concentration control system 100 and does not perform the gas separation operation.

Although not illustrated in FIG. 7, the control mode display screen 300 may display the valve openings of the regulating valves 2 to 5 calculated in steps S4 and S5, sensor values, such as the supply gas concentration and the product gas concentration, input to the calculations in steps S2 to S5, target values thereof, and the like. In addition, the control mode display screen 300 including the buttons 311, 312, and 313 is an example, and these buttons may be omitted, or buttons for performing other settings may be displayed.

### [Modifications]

Note that the gas concentration control system and the gas concentration control method according to the present invention are not limited to the configuration and processing described in the above embodiment, and various modifications can be made without departing from the gist of the invention described in the claims. In addition, the above embodiment has been described in detail to clearly explain the present invention, and is not necessarily limited to those that include all of the described configurations.

For example, in the system configuration illustrated in FIGS. 1 and 2, only the control lines and information lines considered to be necessary for explanation are illustrated, and not all of the control lines and information lines present in the actual product are necessarily illustrated. In practice, it can be considered that almost all of the components are connected to each other.

In addition, the procedure of the processing illustrated in the flowchart in FIG. 6 is also an example. As long as the results of the processing are the same, part of the processing order may be changed, or multiple steps in the processing may be performed simultaneously.

In the above embodiment, an example in which the concentration/pressure control unit 11 of the control device 10 controls the concentrations of hydrogen gas and existing gas has been described. On the other hand, the concentration/pressure control unit 11 of the control device 10 may control the pressures of the hydrogen gas and existing gas. In this case, the regulating valves 2 to 5 may be caused to function as pressure valves, and the concentration/pressure control unit 11 may control the regulating valves 2 to 5 based on the pressure measurement values of the sensors 6 to 9. In addition, the concentration/pressure control unit 11 of the control device 10 may control both the concentrations and the pressures of the hydrogen gas and the existing gas.

Furthermore, the gas concentration control system according to the above embodiment has been described as a system for pipelines that transport hydrogen gas and existing gas (natural gas or the like), but may be applied to a system that mixes another gas, such as carbon dioxide (CO₂), with existing gas and transports the mixed gas.

In addition, the configuration of the control device 10 illustrated in FIG. 2 as a computer is also an example, and other configurations may be adopted. For example, some or all of the configurations, functions, processing units, and the like described in the above embodiment may be implemented by hardware, for example, by designing with an integrated circuit. As the hardware, a processor device in a broad sense, such as a field programmable gate array (FPGA) or an application specific integrated circuit (ASIC), may be used.

In addition, a program for executing the processing described in the above embodiment may be mounted on an existing computer to obtain a device that performs the gas concentration control method according to the present invention. The program in this case may be stored on a recording medium, such as an external memory, an IC card, an SD card, or an optical disk, and transferred to a computer that functions as a control device for the gas concentration control system.

## Claims

1. A gas concentration control system comprising:
a gas concentration control device configured to adjust a concentration of product gas according to demand, the gas concentration control system including:
a gas separator configured to separate supply gas, the supply gas being mixed gas, into permeate gas with a high concentration of an arbitrary component and non-permeate gas with a low concentration;
a regulating valve configured to adjust a ratio of permeate gas and non-permeate gas in product gas obtained by remixing the permeate gas and the non-permeate gas separated by the gas separator;
a vent valve configured to adjust a gas flow rate for returning part of the permeate gas or the non-permeate gas to a supply source of the mixed gas; and
a gas concentration meter configured to measure a gas concentration of the supply gas and a gas concentration of the remixed gas; and
a concentration and/or pressure control unit configured to control a concentration and/or pressure of the product gas by switching a combination of the regulating valve and the vent valve based on two or more conditions of gas concentrations and gas pressures of the supply gas and the product gas.

2. The gas concentration control system according to claim 1, further comprising:
a supply gas-based determination unit configured to determine whether to allow an entire flow rate of the supply gas to flow into the product gas based on information on the gas concentration or the gas pressure of the supply gas; and
a product gas-based determination unit configured to determine whether to allow an entire flow rate of the supply gas to flow into the product gas based on information on the gas concentration or the gas pressure of the product gas, wherein
when a determination result of the supply gas-based determination unit is different from a determination result of the product gas-based determination unit, and when the supply gas-based determination unit has determined that the entire flow rate of the supply gas is allowed to flow into the product gas and the product gas-based determination unit has determined that the entire flow rate of the supply gas is not allowed to flow into the product gas, the concentration and/or pressure control unit is configured to prioritize the result of the product gas-based determination unit to control the concentration and/or pressure of the product gas.

3. The gas concentration control system according to claim 2, further comprising a display data generation unit configured to generate and output display data about information including one or both of the determination result of the supply gas-based determination unit and the determination result of the product gas-based determination unit.

4. The gas concentration control system according to claim 3, wherein the display data generated by the display data generation unit indicates, for each regulating valve, that concentration control is being performed, pressure control is being performed, or the regulating valve is being closed.

5. A gas concentration control method comprising:
gas separation processing of separating supply gas, the supply gas being mixed gas, into permeate gas with a high concentration of an arbitrary component and non-permeate gas with a low concentration;
adjustment processing of adjusting a ratio of permeate gas and non-permeate gas in product gas obtained by remixing the permeate gas and the non-permeate gas separated in the gas separation processing;
vent processing of adjusting a gas flow rate for returning part of the permeate gas or the non-permeate gas to a supply source of the mixed gas;
gas concentration measurement processing of measuring a gas concentration of the supply gas and a gas concentration of the remixed gas; and
gas concentration adjustment processing of adjusting a concentration of the product gas according to demand, wherein
the gas concentration adjustment processing includes controlling a concentration and/or pressure of the product gas by switching a combination of the adjustment processing and the vent processing based on two or more conditions of gas concentrations and gas pressures of the supply gas and the product gas.

## Amended claims

### Amended claims in accordance with Rule 137(2) EPC.

1. A gas concentration control system (100) comprising:
a gas concentration control device (10) configured to adjust a concentration of product gas (22) according to demand, the gas concentration control system (100) including:
a gas separator (1) configured to separate supply gas (21), the supply gas (21) being mixed gas, into permeate gas (24) with a high concentration of an arbitrary component and non-permeate gas (25) with a low concentration;
a regulating valve (2, 3) configured to adjust a ratio of permeate gas (24) and non-permeate gas (25) in product gas (22) obtained by remixing the permeate gas (24) and the non-permeate gas (25) separated by the gas separator (1);
a vent valve (4, 5) configured to adjust a gas flow rate for returning part of the permeate gas (24) or the non-permeate gas (25) to a supply source of the mixed gas;
a gas concentration meter (6, 7, 8, 9) configured to measure a gas concentration of the supply gas (21) and a gas concentration of the remixed gas;
a concentration and/or pressure control unit (11) configured to control a concentration and/or pressure of the product gas (22) by switching a combination of the regulating valve (2, 3) and the vent valve (4, 5) based on two or more conditions of gas concentrations and gas pressures of the supply gas (21) and the product gas (22);
a supply gas-based determination unit (12) configured to determine whether to allow an entire flow rate of the supply gas (21) to flow into the product gas (22) based on information on the gas concentration or the gas pressure of the supply gas (21); and
a product gas-based determination unit (13) configured to determine whether to allow an entire flow rate of the supply gas (21) to flow into the product gas (22) based on information on the gas concentration or the gas pressure of the product gas (22), wherein
when a determination result of the supply gas-based determination unit (12) is different from a determination result of the product gas-based determination unit (13), and when the supply gas-based determination unit (12) has determined that the entire flow rate of the supply gas (21) is allowed to flow into the product gas (22) and the product gas-based determination unit (13) has determined that the entire flow rate of the supply gas (21) is not allowed to flow into the product gas (22), the concentration and/or pressure control unit (11) is configured to prioritize the result of the product gas-based determination unit (13) to control the concentration and/or pressure of the product gas (22).

2. The gas concentration control system (100) according to claim 1, further comprising a display data generation unit (14) configured to generate and output display data about information including one or both of the determination result of the supply gas-based determination unit (12) and the determination result of the product gas-based determination unit (13).

3. The gas concentration control system (100) according to claim 2, wherein the display data generated by the display data generation unit (14) indicates, for each regulating valve (2, 3), that concentration control is being performed, pressure control is being performed, or the regulating valve (2, 3) is being closed.

4. A gas concentration control method comprising:
gas separation processing of separating supply gas (21), the supply gas (21) being mixed gas, into permeate gas (24) with a high concentration of an arbitrary component and non-permeate gas (25) with a low concentration;
adjustment processing of adjusting a ratio of permeate gas (24) and non-permeate gas (25) in product gas (22) obtained by remixing the permeate gas (24) and the non-permeate gas (25) separated in the gas separation processing;
vent processing of adjusting a gas flow rate for returning part of the permeate gas (24) or the non-permeate gas (25) to a supply source of the mixed gas;
gas concentration measurement processing of measuring a gas concentration of the supply gas (21) and a gas concentration of the remixed gas;
gas concentration adjustment processing of adjusting a concentration of the product gas (22) according to demand, wherein
the gas concentration adjustment processing includes controlling a concentration and/or pressure of the product gas (22) by switching a combination of the adjustment processing and the vent processing based on two or more conditions of gas concentrations and gas pressures of the supply gas (21) and the product gas (22);
supply gas-based processing of determining whether to allow an entire flow rate of the supply gas (21) to flow into the product gas (22) based on information on the gas concentration or the gas pressure of the supply gas (21); and
product gas-based processing of determining whether to allow an entire flow rate of the supply gas (21) to flow into the product gas (22) based on information on the gas concentration or the gas pressure of the product gas (22),
wherein
when a determination result of the supply gas-based processing is different from a determination result of the product gas-based processing, and when the supply gas-based processing has determined that the entire flow rate of the supply gas (21) is allowed to flow into the product gas (22) and the product gas-based processing has determined that the entire flow rate of the supply gas (21) is not allowed to flow into the product gas (22), the gas concentration adjustment processing prioritizes the result of the product gas-based processing to control the concentration and/or pressure of the product gas (22).
